(19) Europäisches Patentamt / European Patent Office / Office européen des brevets

(11) **EP 2 626 247 A1**

(12) **DEMANDE DE BREVET EUROPEEN**

(43) Date de publication:
**14.08.2013 Bulletin 2013/33**

(51) Int Cl.:
**B60R 7/04** *(2006.01)*   **B60R 11/06** *(2006.01)*
**B60R 21/055** *(2006.01)*   **F16F 7/12** *(2006.01)*

(21) Numéro de dépôt: **12305143.5**

(22) Date de dépôt: **10.02.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Institut National de Recherche et de Sécurité**
**pour la Prévention des Accidents du Travail et des Maladies Professionnelles (INRS)**
**75680 Paris Cedex 14 (FR)**

(72) Inventeurs:
• **Fleury, Gérard**
  **54740 LEMAINVILLE (FR)**
• **Parisot, Eric M.**
  **54690 LAY SAINT CHRISTOPHE (FR)**

(74) Mandataire: **Delprat, Olivier**
  **Casalonga & Partners**
  **Bayerstrasse 71/73**
  **80335 München (DE)**

(54) **Elément de liaison et de rétention avec absorption d'énergie d'un aménagement à l'intérieur d'un véhicule**

(57) Un élément de liaison (1) permet d'assembler deux éléments par une liaison de type encastrement. L'élément de liaison comprend une bande de tôle (2) comportant une première (3) et une seconde extrémité (4) aptes à être assemblées respectivement sur le premier et sur le second élément. La bande (2) comprend une portion d'enroulement (16) reliant les deux extrémités (3, 4), qui est roulée sur elle-même de manière à former un rouleau (30) hors duquel les deux extrémités (3, 4) émergent suivant le même sens de rotation, et qui est dimensionnée pour assurer la résistance en traction, torsion, et flexion entre les deux extrémités (3, 4) d'assemblage.

FIG.1

**Description**

L'invention se situe dans le domaine des systèmes de fixation ou de liaison, et notamment dans le domaine des systèmes de fixation permettant de solidariser un aménagement intérieur à une paroi d'un véhicule. De tels systèmes de fixation permettent par exemple d'assembler des équipements tels que des armoires de rangement d'outillage professionnel, à l'intérieur de véhicules utilitaires.

Ces systèmes de fixation peuvent également comprendre les liaisons permettant de relier un élément rigide et un élément souple - voire deux éléments souples à l'intérieur du véhicule - par exemple permettant d'attacher une extrémité ou une boucle de ceinture de sécurité à un point d'ancrage arrimé à un plancher ou à un point de la carrosserie du véhicule.

En cas d'accident de la route, et plus particulièrement en cas de collision frontale, un équipement non retenu, ou retenu par des fixations inadaptées à l'arrière du véhicule, est projeté vers l'avant en direction de la zone passagers du véhicule.

Une cloison de séparation est parfois montée derrière la zone passagers, mais peut s'avérer insuffisante pour retenir un meuble massif ou lourdement chargé, qui se détacherait de la paroi du véhicule.

Les armoires ou autres aménagements aptes à recevoir le chargement du véhicule sont généralement assemblés à la tôle extérieure du véhicule avec des équerres métalliques. En cas de choc du véhicule, l'équerre ne présente qu'une possibilité de déformation réduite avant rupture. Suivant le dimensionnement des équerres, de l'armoire, et de la paroi du véhicule, un des trois éléments risque donc de casser de manière brutale, et le chargement peut se trouver projeté en direction du conducteur, au risque de le blesser ou de le tuer.

Des équerres améliorées ont été proposées, comprenant deux zones d'assemblage positionnées à angle droit l'une par rapport à l'autre, et comprenant entre les deux zones d'assemblage une portion de tôle coupée de fentes parallèles en quinconce, les fentes étant perpendiculaires à la direction suivant laquelle on souhaite obtenir une réserve de déformation de l'équerre.

Ainsi, lors d'un choc, la zone ajourée centrale de la tôle peut-elle se déformer comme un grillage qu'on étire. Les efforts de traction sur l'équerre sont distribués sur des zones de la tôle qui sont de section réduite du fait des entailles. Cette équerre doit donc être réalisée dans un acier à haute limite élastique. En outre, les « entailles » doivent présenter une géométrie maîtrisée afin d'être arrondies à leurs extrémités, et ne pas provoquer une rupture précoce de l'équerre.

Le procédé de découpe de la tôle nécessite en outre un soin particulier, afin de garantir un état de surface à l'intérieur des "entailles" qui n'accentue pas inutilement les concentrations de contraintes aux extrémités des entailles. Cette équerre est donc chère à fabriquer, et n'offre une réserve de déformation que de quelques centimètres. En outre, l'énergie totale de déformation plastique de l'équerre mise en oeuvre avant d'atteindre la contrainte à rupture de l'équerre est limitée, car elle résulte du pliage de la tôle en un nombre limité de points de pliages localisés.

L'invention a pour but de proposer un élément de liaison économique à fabriquer, offrant une grande réserve de déformation, et de contrainte à la rupture supérieure à celle des équerres ajourées existantes.

A cette fin, l'invention propose un élément de liaison permettant d'assembler deux éléments par une liaison de type encastrement. L'élément de liaison comprend une bande de tôle comportant une première et une seconde extrémité aptes à être assemblées respectivement sur le premier et sur le second élément. La résistance en traction, torsion, et flexion entre les deux extrémités d'assemblage est assurée par une portion d'enroulement de la bande reliant les deux extrémités, et qui est roulée sur elle-même de manière à former un rouleau hors duquel les deux extrémités émergent suivant le même sens de rotation. L'élément de liaison peut être notamment de type équerre, plat ou être un autre élément d'assemblage entre deux plans.

Selon un mode de réalisation particulièrement avantageux, la portion d'enroulement de la bande comprend une portion centrale de bande pliée en forme de "S", la portion centrale formant un noyau autour duquel viennent s'enrouler, respectivement dans le prolongement d'une première et d'une seconde extrémités du "S", un premier et un second tronçon de la portion d'enroulement.

De manière préférentielle, les extrémités du "S" sont sensiblement tangentes à une première spire du rouleau formée par deux demi cylindres dessinés respectivement par le premier et le second tronçon, la première spire entourant le "S".

La portion d'enroulement peut être roulée sur elle-même autour du noyau de manière à former une succession de couches superposées et concentriques de la bande. Selon un mode de réalisation préféré, une couche du premier tronçon alterne ainsi avec une couche du second tronçon. Selon un autre mode de réalisation possible, une couche peut comprendre une portion du premier tronçon et une portion du second tronçon positionnées axialement l'une à côté de l'autre.

Selon un mode de réalisation avantageux, la largeur de chaque tronçon est croissante entre la portion en "S", et les extrémités d'assemblage. Par largeur, on entend ici la largeur axiale de la bande, c'est-à-dire sa dimension mesurée suivant l'axe d'enroulement de la bande.

Selon une autre mode de réalisation, chacun des deux tronçons de la portion d'enroulement est de largeur constante. Par exemple, toute la portion d'enroulement est de largeur constante. De manière préférentielle, avant la mise en forme de la bande, le contour du premier tronçon peut être le symétrique (par rapport à un point, ou mieux, par rapport à un axe de symétrie) du contour du second tronçon.

Selon d'autres modes de réalisation, la portion centrale pliée en "S" peut être de largeur différente de la largeur des deux tronçons, par exemple être plus large afin de faciliter le centrage et le maintien de la bande dans l'outil de mise en forme lors de la fabrication de l'élément de liaison.

Selon une variante de réalisation, le "S" dessiné par la portion centrale de la bande est formé de deux demi cercles. Selon d'autres variantes de réalisation, le "S" de la portion centrale comporte une portion de barre centrale sensiblement rectiligne.

Selon un mode de réalisation particulièrement avantageux, la largeur de la portion d'enroulement est sensiblement constante couche par couche (i.e. la largeur de la portion d'enroulement est sensiblement constante par paliers, chaque palier correspondant au périmètre d'une demi-spire de l'enroulement et les tronçons de la portion d'enroulement étant symétriques l'une de l'autre). Les bords de la surface développée de la partie centrale forment alors des courbes "en escaliers". On obtient ainsi une courbe effort-déplacement lors du dépliement de la portion d'enroulement, qui présente après franchissement d'un seuil plastique, un plateau d'effort sensiblement constant sur la course de dépliement de la bande. Selon un autre mode de réalisation possible, les bords de la développée de chaque tronçon forment une courbe dont le rayon de courbure varie de façon continue jusqu'à ce que la largeur du tronçon atteigne sa largeur maximale. On limite alors les phénomènes de concentration de contrainte au niveau du passage d'une spire à l'autre.

De manière préférentielle, la longueur de la partie enroulée de la portion d'enroulement est inférieure à 300mm, et de préférence est inférieure à 250mm. Dans certains modes de réalisation, elle peut être inférieure ou égale à 200mm. Par longueur de la partie enroulée, on entend la longueur de la bande mesurée dans un plan perpendiculaire à la direction d'enroulement de la bande. On compte comme longueur enroulée la portion centrale pliée en "s" ainsi que les spires de tôle entourant cette portion centrale.

Le diamètre des spires d'enroulement successives, l'épaisseur de la tôle et l'allongement à rupture du matériau qui la constitue peuvent par exemple être choisis de manière à pouvoir dérouler à plat les deux tronçons de la portion d'enroulement sans dépasser l'allongement à rupture de la tôle sur l'intérieur des spires déroulées. Cela revient à dire que la bande peut être déroulée -en subissant une déformation plastique- sans engendrer de fissures sur la face interne des spires. En première approximation en tenant compte de l'allongement des fibres de la tôle à l'intérieur des spires, la déformation à la rupture du matériau constituant la tôle doit être supérieure à l'épaisseur de chaque spire divisée par deux fois le rayon moyen de la spire.

L'épaisseur de la bande est par exemple supérieure ou égale à 1,5mm, et de préférence supérieure ou égale à 2,5mm.

La largeur minimale de la portion d'enroulement est de préférence supérieure ou égale à 5 fois son épaisseur, et de préférence est supérieure ou égale à 10 fois son épaisseur. On obtient ainsi un comportement de plastification de bande plane lors du déroulement, et non un comportement de plastification de type déroulement d'un fil.

La tôle peut être en acier non allié, par exemple de type E24 ou en acier inox, par exemple de type 304L.

La tôle peut également être en alliage d'aluminium. Avantageusement, la tôle peut être en alliage d'aluminium à durcissement structural, tels que les alliages des familles 2000 (base aluminium-cuivre), 4000 (base aluminium-silicium), 6000 (base aluminium-magnésium-silicium) et 7000 (base aluminium -zinc).

Selon un mode de réalisation avantageux, les deux extrémités de l'élément de liaison sont disposées sensiblement à angle droit l'une par rapport à l'autre, ou de manière à pouvoir être solidarisées avec deux plans sensiblement perpendiculaires l'un par rapport à l'autre. Selon un autre mode de réalisation avantageux, les deux extrémités peuvent être disposées sensiblement dans un même plan, ou de manière à pouvoir être assemblées sur un même plan géométrique.

La portion d'enroulement peut être par exemple enroulée sur elle-même de manière à ce que le nombre maximal d'épaisseurs de tôle soit compris entre 2 et 5. Le rayon de courbure minimal de flexion de la tôle au niveau -imposé au niveau de la portion pliée en "S"- est de préférence supérieur ou égal à l'épaisseur de la tôle. Selon un mode de réalisation préférentiel, le rayon de courbure minimal de flexion de la tôle est supérieur ou égal à 0,2 fois le diamètre intérieur de la spire la plus petit entourant le "S". Selon un mode de réalisation préféré, les deux extrémités sont percées de trous d'assemblage. Chaque extrémité d'assemblage peut être plane, ou comporter des reliefs emboutis, pliés, découpés et/ou usinés, de manière à faciliter la mise en place d'éléments de fixations, tels que des vis, ou de manière à améliorer l'appui sur les surfaces des éléments à solidariser. Les plans d'assemblage des deux extrémités peuvent être orientés pour former l'un par rapport à l'autre un angle quelconque, de manière à pouvoir s'adapter à différentes géométries de meubles à fixer et à différentes courbures de paroi intérieure de véhicule.

L'invention sera mieux comprise à la lecture de la description détaillée de quelques modes de réalisation pris à titre d'exemples nullement limitatifs et illustrés par les dessins annexés sur lesquels :

- la figure 1 est une vue en perspective d'un élément de liaison selon l'invention,
- la figure 2 montre le contour d'une portion de tôle destinée à être mise en forme pour obtenir un autre élément de liaison selon l'invention,
- la figure 3 illustre une courbe effort/déplacement obtenue lors d'un essai de traction dynamique sur un élément de liaison obtenu à partir du flan de la figure 2,

- les figures 4 et 5 illustrent des variantes de mise en forme possible de bandes de tôle afin d'obtenir des éléments de liaison selon l'invention,
- les figures 6 et 7 sont des vues simplifiées en coupe selon un plan horizontal, d'équipements assemblés sur une paroi de véhicule à l'aide d'éléments de liaison selon l'invention,
- la figure 8 montre le contour d'une portion de tôle destinée à être mise en forme pour obtenir une variante d'élément de liaison selon l'invention.

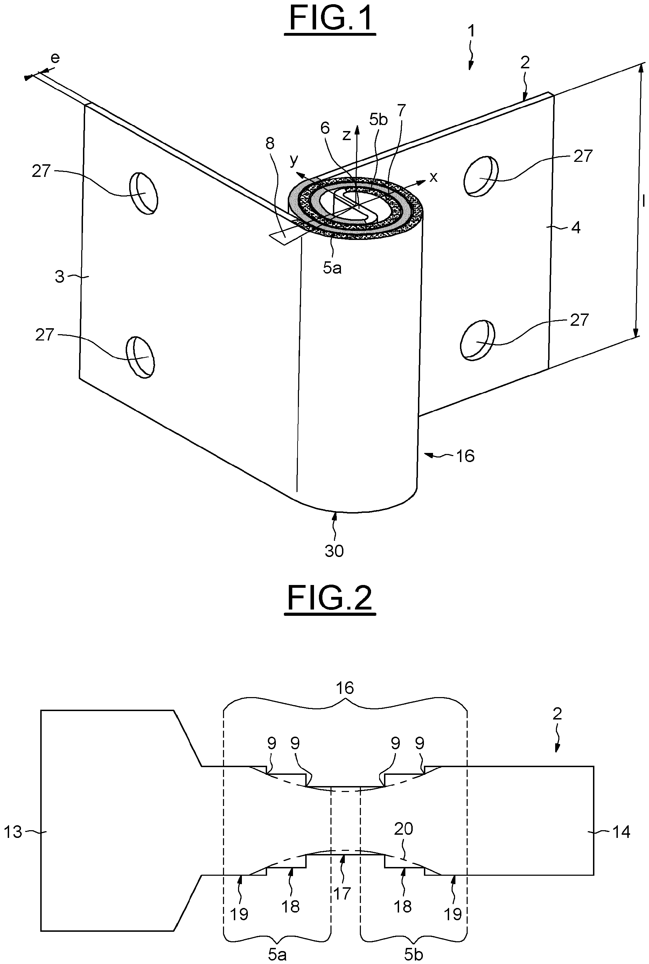

La figure 1 illustre un élément de liaison 1 formé à partir d'une bande de tôle 2 d'épaisseur e, et de largeur 1. L'épaisseur e et la largeur 1 sont ici constantes d'un bout à l'autre de la bande. La bande de tôle 2 a initialement une forme rectangulaire. Elle est ensuite mise en forme, par exemple en l'enroulant autour d'un mandrin l'enserrant de part et d'autre d'une portion d'enroulement, de manière à former un rouleau 30 enroulé en plusieurs épaisseurs autour d'une direction parallèle à un axe z.

Une première extrémité d'assemblage 3 de la bande 2 et une seconde extrémité d'assemblage 4 de la bande, dépassent du rouleau 30. Les deux extrémités 3 et 4 sont orientées suivant deux plans sensiblement perpendiculaires correspondant respectivement à un plan Oyz et à un plan Oxz, ces deux plans se rencontrant suivant un axe z' parallèle à l'axe z.

Chacune des extrémités émerge du rouleau 30 de manière tangente à l'enroulement. Les deux extrémités émergent du rouleau suivant le même sens de rotation qui correspond, sur la figure 1, au sens trigonométrique inverse (en regardant l'élément de liaison à partir des z positifs, c'est-à-dire par au dessus).

Si l'on retourne la pièce, les deux extrémités émergent bien sûr toutes deux suivant le sens trigonométrique direct, donc toujours suivant le même sens de rotation. Au centre du rouleau 30, la bande de tôle 2 comporte une partie centrale 6 pliée en « S ». Autour de cette partie 6 pliée en S, est bobinée une portion d'enroulement 16 de la bande qui forme plusieurs spires. Suivant la position angulaire où on se place par rapport au rouleau, on peut compter un nombre différent d'épaisseurs de tôle au niveau du rouleau 30. Ici, le nombre maximal d'épaisseurs se trouve au niveau d'un secteur 8 dans lequel on peut compter quatre épaisseurs de tôle.

Sur le reste de l'enroulement, on compte ici trois épaisseurs de tôle. Le nombre d'épaisseurs peut ainsi varier d'une unité au plus, entre la zone d'enroulement la plus épaisse et la zone d'enroulement la moins épaisse, en fonction notamment de la position angulaire du « S » formé par la portion centrale. Les extrémités d'assemblage 3 et 4 peuvent être percées de trous d'assemblage permettant de passer par exemple des vis de fixation. Elles peuvent ne pas être percées si elles sont prévues pour un assemblage par soudage.

L'élément de liaison illustré sur la figure 1 peut par exemple être obtenu de la manière suivante. A l'aide d'une plieuse, on imprime d'abord deux plis en sens inverse et à 90° - dans le sens de l'épaisseur de la tôle - suivant deux lignes parallèles entre elles et perpendiculaires à la plus grande dimension de la tôle. Les plis peuvent respecter un rayon de courbure minimal afin de ne pas endommager la tôle. Par exemple, dans l'exemple illustré, où on utilise une tôle d'épaisseur de 2,5 mm, le rayon de courbure au niveau du pliage pourra être supérieur ou égal à 3 mm.

On pince ensuite à l'aide d'un mandrin en deux parties (non représenté), la zone entre les deux plis qui constituera la barre centrale du « S ». On enroule ensuite la bande de tôle 2 autour du mandrin, en faisant tourner le mandrin entre deux rouleaux (non représentés) dont on augmente progressivement l'écartement de manière à ce que chaque spire de tôle vienne s'enrouler sensiblement au contact de l'enroulement déjà existant. On obtient ainsi un rouleau 30 dont deux extrémités de bande émergent de manière sensiblement parallèle l'une par rapport à l'autre. On dégage ensuite l'une des extrémités hors des rouleaux de guidage, et on continue d'enrouler l'autre extrémité jusqu'à obtenir l'angle désiré entre les deux extrémités d'assemblage. Le "S" central forme alors un noyau autour duquel s'enroulent, respectivement dans le prolongement d'une première et d'une seconde extrémité du "S", un premier tronçon 5a et un second tronçon 5b de la portion d'enroulement 16. Pour faciliter la lecture, la tranche du premier tronçon et la tranche du second tronçon ont été hachurés, avec deux types de hachures différentes.

Une des extrémités est ensuite assemblée au meuble ou à l'équipement à fixer dans le véhicule, et l'autre extrémité est assemblée à une paroi du véhicule. L'assemblage peut se faire par exemple par un système de vis, de rivets ou par soudage. L'axe z correspondant à l'axe d'enroulement du rouleau 30 est placé perpendiculairement à la direction -ou aux directions- suivant lesquelles on souhaite disposer, à l'aide de l'élément de liaison, d'une réserve de déformation et d'absorption d'énergie.

Dans l'exemple de réalisation illustré sur la figure 1, l'élément de liaison est réalisé à partir d'une tôle d'acier E24 (selon NF A 35-501), d'épaisseur 2,5 mm, de largeur 100 mm et de longueur 900 mm. La tôle à été enroulée autour d'un mandrin, dont les contours extérieurs de la section transversale sont inscrits dans un cercle de diamètre égal à 15 mm.

D'autres types d'acier peuvent être envisagés, les dimensions de l'enroulement pouvant être au besoin adaptées aux propriétés de l'acier ou du métal choisi. L'allongement à la rupture et l'épaisseur de la tôle devront être choisis de manière à ce que lors du déroulement de la bande, l'allongement à la rupture ne soit pas dépassé sur les fibres intérieures de l'enroulement. En première approximation, si l'on considère qu'en se dépliant, une fibre de la tôle s'allonge/se contracte proportionnellement à sa distance par rapport à une fibre neutre à mi épaisseur de la tôle, cela revient à dire que

$$\varepsilon_r > \frac{e}{2R}$$ , où $\varepsilon_r$ est l'allongement à rupture de la tôle (valeur sans dimension), e l'épaisseur de la tôle et R le rayon moyen de la spire (e et R doivent être exprimés dans la même unité). On peut utiliser des aciers de limite élastique plus élevée que celle de l'acier E24, et utiliser alors des épaisseurs de tôle inférieures, à la fois pour ne pas augmenter démesurément les couples nécessaires pour la mise en forme de l'élément de liaison, et parce qu'une épaisseur moindre sera nécessaire pour absorber la même énergie lors du déploiement de l'élément.

On peut envisager d'utiliser des tôles en alliage d'aluminium, ce qui permet d'augmenter au besoin l'épaisseur des tôles tout en gardant un poids modéré de l'élément de liaison. Plus la tôle est épaisse, plus l'énergie plastique nécessaire pour la déplier sur un même rayon de bobinage est élevée. On peut notamment utiliser des alliages d'aluminium à durcissement structural, qui peuvent être mis en forme tant que leur limite d'élasticité est modérée juste après la trempe, puis augmenter la limite élastique de l'aluminium en effectuant un revenu.

Dans le cas où la tôle est en acier, on peut éventuellement effectuer un recuit après la mise en forme pour réduire les contraintes résiduelles emmagasinées dans la bande. Des tôles découpées dans d'autres métaux ou alliages, et d'autres types de traitement thermique sont bien sûr envisageables.

Sur la figure 2 est illustré le contour d'une bande d'acier à partir de laquelle on peut réaliser un autre d'élément de liaison selon l'invention. La bande de tôle 2 comprend une première extrémité d'assemblage 13 et une seconde extrémité d'assemblage 14, qui sont toutes deux de largeur supérieure ou égale à la largeur d'une portion d'enroulement 16 destinée à être enroulée pour former un rouleau similaire au rouleau 30 de la figure 1.

La portion d'enroulement comprend une première portion de section minimale 17, destinée à former par enroulement le « S » central et le premier rouleau venant se refermer sur le « S ».

De part et d'autre de cette première portion, se trouvent deux secondes portions 18 destinées à former chacune une demi circonférence d'un deuxième rouleau entourant le premier rouleau. De part et d'autre de ces secondes portions 18, se trouvent deux troisièmes portions 19 destinées à former par enroulement un troisième rouleau entourant le second rouleau.

Ainsi, la largeur de la bande dans sa portion d'enroulement est-elle sensiblement constante sur chaque spire successive entourant le « S » central. La largeur des première, secondes et troisièmes portions centrales est calculée de manière à ce que l'effort fourni pour dérouler chacune des épaisseurs d'enroulement soit sensiblement le même.

On obtient ainsi, lors du déroulement de l'enroulement central, une courbe effort/déplacement qui présente un plateau d'effort dans la phase correspondant au déroulement de la portion d'enroulement.

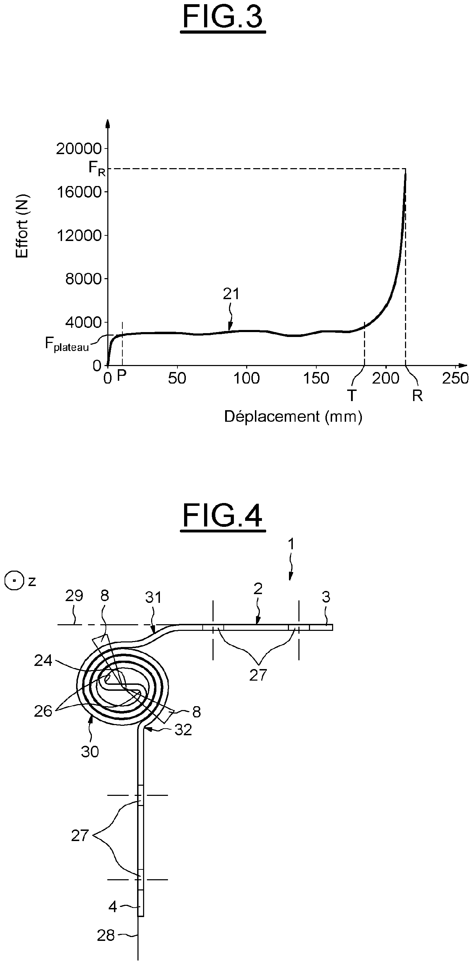

Une telle courbe est illustrée à la figure 3.

Dans la configuration illustrée à la figure 2, les bords de la tôle forment une courbe en escalier qui peut être source de concentration de contraintes au niveau des angles rentrants 9 de la courbe. Afin d'éviter ce phénomène, on peut envisager d'utiliser une bande de tôle dont la section croît du centre vers les bords de la portion d'enroulement de manière plus continue, par exemple une courbe telle que la courbe 20 illustrée en pointillés.

La figure 3 est un graphe illustrant par une courbe 21 l'évolution d'un effort de traction entre deux éléments auxquels sont attachées respectivement les deux extrémités de l'élément de liaison fabriqué à partir de la bande illustrée en figure 2. L'effort est représenté en fonction de la distance imposée entre les deux extrémités de l'élément de liaison.

Entre l'origine et un premier point d'abscisse P, la valeur d'effort est croissante. Pendant la première étape de déformation correspondant à cette première portion de la courbe, l'élément de liaison subit des déformations élastiques ainsi que quelques déformations plastiques permettant d'aligner les efforts de traction exercés aux deux bouts de la portion d'enroulement, pour dérouler celle-ci.

Entre l'abscisse P et un autre point d'abscisse T, la courbe 21 suit ensuite un plateau correspondant à un effort sensiblement constant $F_{plateau}$. Ce plateau cor-respond à la phase de déroulement de la portion d'enroulement de bande. Une fois que la portion d'enroulement est déroulée, elle se comporte comme une éprouvette de traction simple, et l'effort de traction augmente à nouveau jusqu'à atteindre un point de rupture $F_R$ correspondant à une abscisse R.

Les dimensions de la bande utilisée pour réaliser l'élément de liaison peuvent être adaptées de manière à ce que l'effort correspondant au plateau reste inférieur à un effort d'arrachement de l'élément de liaison de la paroi du véhicule ou de l'élément d'aménagement à retenir. Cet arrachement est susceptible de se produire par exemple par rupture de la tôle du véhicule ou de la paroi de l'aménagement. En même temps, les dimensions de la bande de tôle sont choisies pour que l'effort plateau soit supérieur à un seuil minimal qui dépendra en particulier des décélérations à subir, de leur durée, du poids de l'élément d'aménagement, et du nombre d'éléments de liaison alloués à son installation.

Une fois l'effort plateau choisi, la longueur de la partie centrale et le nombre de spires de l'élément de liaison, peuvent être choisis de manière à ce que la longueur du plateau soit supérieure à une longueur minimum permettant de consommer un niveau minimum d'énergie cinétique défini par le cahier des charges du véhicule. La longueur du plateau doit cependant rester inférieure à un maximum raisonnable dépendant notamment de l'espace séparant l'aménagement de l'habitacle du conducteur et l'intrusion tolérée de l'aménagement dans l'habitacle, typiquement, la longueur du plateau peut être inférieure ou égale à 300 mm.

La forme en plateau est avantageuse car elle permet de consommer, au cours de la déformation plastique, une énergie cinétique importante, sans solliciter excessivement les points d'ancrage de l'élément de liaison. Cependant, des portions d'enroulement présentant des géométries différentes de celle illustrée à la figure 2 peuvent être envisagées sans s'écarter de l'invention, par exemple des portions d'enroulement de largeur constante, qui résultent en une courbe effort/déplacement croissant pendant la phase de déroulement, ou des portions d'enroulement ayant pour contour la courbe 20 de la figure 2, qui conduisent à des courbes effort/déplacement modérément croissantes pendant le déroulement.

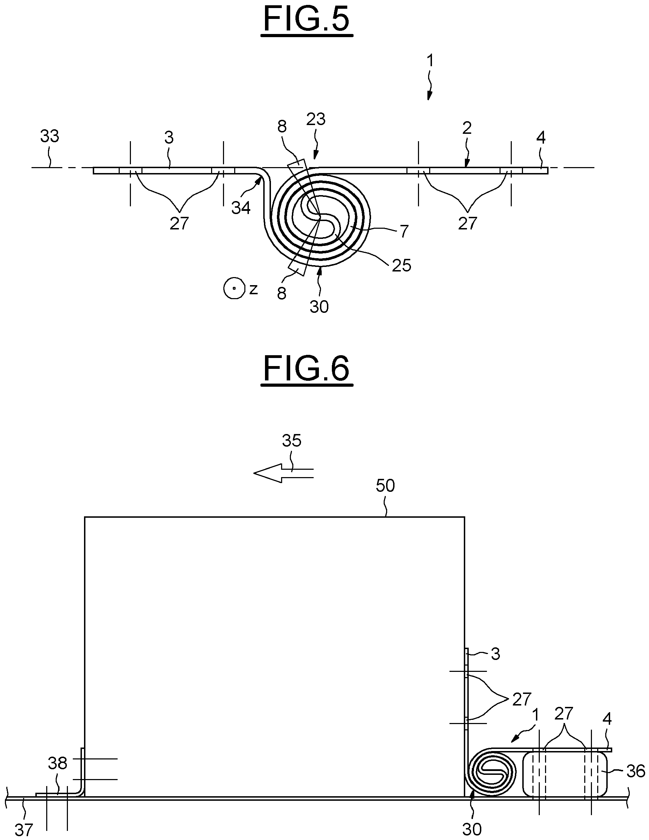

Les figures 4 et 5 sont des vues de dessus (vue suivant une direction parallèle à la largeur de la tôle) de deux éléments de liaison selon l'invention. On retrouve sur les figures 4 et 5 des éléments communs aux figures précédentes, les mêmes éléments étant désignés par les mêmes références. Les extrémités 3 et 4 sont munies de trous d'assemblage 27 permettant par exemple de passer des vis d'assemblage. Entre le rouleau 30 et la première extrémité d'assemblage 3, sur la figure 4, la bande de tôle 2 forme un décrochement 31 qui permet d'assembler l'extrémité 3 sur un plan géométrique 29 décalé par rapport au rouleau 30. La bande de tôle 2 forme également un pli 32 entre le rouleau 30 et la seconde extrémité d'assemblage 4, de manière à pouvoir assembler l'extrémité d'assemblage 4 sur un plan géométrique 28 interceptant le rouleau 30.

D'innombrables variations du profil de la bande de tôle 2 entre le rouleau 30 et ses deux extrémités d'assemblage sont envisageables, afin d'adapter la géométrie de l'élément de liaison à l'encombrement disponible entre le véhicule et l'équipement à fixer.

On peut notamment prévoir des angles entre les extrémités 3 et 4 qui sont quelconques pour s'adapter aux courbures de la paroi du véhicule et à la géométrie des équipements.

On peut également envisager de replier la bande de tôle 2 entre le rouleau 30 et une extrémité 3 de manière à ce que les deux extrémités 3 et 4 puissent s'assembler sur un même plan géométrique 33, comme illustré à la figure 5.

Comme illustré à la figure 5, on peut ainsi replier l'extrémité 4 sensiblement à 90° de la direction où elle quitte le rouleau 30, le long d'un pli 34. Les plis 31, 32, 34 ainsi que les zones 26 où un rayon de courbure le plus faible est imposé à la bande de tôle 2 -au niveau du « S » central-, devront cependant présenter un rayon de courbure suffisamment grand pour ne pas endommager la tôle et ne pas provoquer une rupture prématurée de la tôle pendant la phase de déroulement du rouleau 30.

Sur la figure 4, la portion de « S » central a été obtenue en pliant sensiblement à 90° la bande de tôle pour former la barre centrale 24 du « S ». On peut optimiser le pliage de la bande au centre du rouleau 30 comme illustré sur la figure 5. Selon la variante illustrée sur la figure 5, la portion destinée à former la portion en « S » est initialement emboutie pour former un « S » arrondi, dessiné suivant deux arcs de cercle de diamètres sensiblement égaux à la moitié du diamètre du premier rouleau intérieur 7 du rouleau 30.

La figure 6 illustre une vue partielle en coupe d'un véhicule équipé d'une armoire 50 maintenue par deux éléments de liaison 1 selon l'invention et par deux équerres 38 métalliques classiques. Le plan de coupe est horizontal et la flèche 35 représente la direction d'avancement du véhicule. L'armoire 50 est vissée sur sa partie avant par deux équerres 38 classiques et situées l'une au dessus de l'autre et dont une seule est visible sur la figure.

L'armoire 50 est fixée sur sa partie arrière (par rapport à la direction du véhicule) par deux éléments de liaison 1 selon l'invention. Une première extrémité d'assemblage 3 de chaque élément de liaison est vissée à la paroi de l'armoire, et une seconde extrémité d'assemblage 4 de chaque élément de liaison est vissée au travers d'une cale 36, à une tôle latérale 37 solidaire de la carrosserie latérale du véhicule (l'élément de liaison peut également être fixé directement sur la carrosserie latérale du véhicule).

Le dimensionnement des équerres 38 et des éléments de liaison 1 est tel que lors d'un choc frontal, les équerres 38 cèdent a priori avant que la force de traction exercée sur le l'élément de liaison 1 atteigne la valeur correspondant au plateau d'effort de déroulement (représenté par $F_{plateau}$ sur la figure 3) de l'élément de liaison.

Suite à la rupture des équerres 38, l'armoire 50 est projetée vers l'avant par la force de décélération, provoquant le déroulement des rouleaux 30 des éléments de liaison 1. L'armoire est donc retenue au niveau de sa partie arrière par les éléments de liaison 1, et au moins une partie de son énergie cinétique est absorbée par la déformation plastique des éléments de liaison.

Si les équerres ne rompent pas, l'énergie cinétique provoque une rotation de l'armoire autour du point d'ancrage des équerres et provoque également le déroulement des éléments de liaison 1 qui permettent ainsi d'absorber l'image cinétique du mouvement.

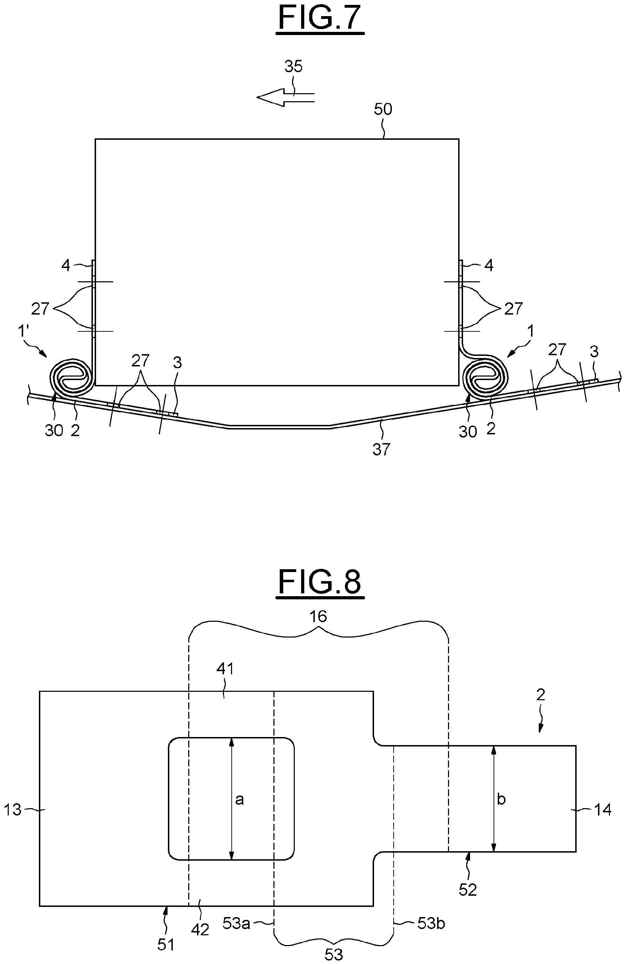

La figure 7 illustre un autre exemple d'installation d'un aménagement à l'intérieur d'un véhicule, cette fois-ci à l'aide de quatre éléments de liaison selon l'invention. On retrouve sur la figure 7 des éléments communs aux figures précédentes, les mêmes éléments étant désignés par les mêmes références. Dans l'exemple de la figure 7, qui est également une vue en coupe partielle par plan horizontal, l'armoire 50 est fixée à la paroi latérale 37 du véhicule par deux premiers éléments de liaison 1 disposés à l'arrière de l'armoire (par rapport à la direction d'avancement du véhicule indiquée par la flèche 35) et par deux éléments de liaison 1' vissés à l'avant de l'armoire 50.

Les éléments de liaison 1 et 1' sont assemblés au véhicule par une première extrémité d'assemblage 3 et sont assemblés à l'armoire par une seconde extrémité d'assemblage 4. L'extrémité d'assemblage 3 se trouve en arrière (par rapport à la direction d'avancement du véhicule) par rapport à l'extrémité d'assemblage 4. On évite ainsi, lors de la mise en tension de l'élément de liaison, que les bandes de tôle 2 ne viennent se replier sur elles-mêmes à 180° par-dessus leur extrémité d'assemblage 3, ce qui risquerait de faciliter la rupture de cette extrémité ou de faciliter l'arrachage des éléments de liaison de la paroi du véhicule.

Dans le cas de figure illustré, les directions d'enroulement des quatre éléments de liaison par rapport un axe vertical z du véhicule sont les mêmes.

Ce sens d'enroulement est tel que l'extrémité d'assemblage 3 attachée à la paroi du véhicule se trouve sensiblement dans le prolongement d'une portion de la bande de tôle 2 qui quitte le rouleau 30 de manière sensiblement tangente au rouleau. De cette façon, le dépliage de la portion d'enroulement se fait en faisant « rouler » le rouleau 30 contre la paroi du véhicule dans le sens d'avancement (indiqué par la flèche 35) de l'armoire 50.

L'invention ne se limite pas aux exemples de réalisation décrits et peut se décliner en de nombreuses variantes.

Les extrémités d'assemblage peuvent être soudées au lieu d'être vissées aux équipements à retenir et aux parois du véhicule.

La partie 6 pliée en "S" peut être plus ou moins centrale par rapport à la longueur totale de la bande de tôle, en fonction des longueurs de bande nécessaire pour réaliser chaque extrémité.

La dimension du mandrin peut être réduite à une valeur inférieure à 15mm, en restant de préférence supérieure à 5 fois le rayon de courbure minimal jugé "acceptable" pour ne pas endommager la tôle. Ce diamètre du mandrin doit de préférence rester limité pour ne pas trop augmenter l'encombrement total de l'élément de liaison, et pour que l'énergie linéaire nécessaire pour dérouler la tôle reste intéressante. On utilisera de préférence un mandrin de diamètre inférieur ou égal à 25mm.

L'épaisseur de la bande peut être variable, par exemple peut être décroissante des extrémités vers la portion centrale de la bande.

Les métaux utilisés pour la bande de tôle peuvent être autres que de l'acier ou de l'aluminium. Les largeurs, épaisseurs, longueurs de la bande de tôle ainsi que son diamètre d'enroulement peuvent être adaptés pour obtenir les forces de déroulement, les longueurs maximales de déplacement et les quantités d'énergie absorbées imposées par les cahiers des charges du véhicule. Les variations de largeur de la bande peuvent suivre des courbes différentes de celles illustrées à la figure 2. Par exemple, la portion d'enroulement 16 telle que décrite sur les figures 1 à 7 ne comporte aucun ajour ni aucun perçage. On peut cependant envisager des variantes de réalisations dans lesquelles une première portion de la portion d'enroulement est ajourée pour pouvoir se superposer, dans le sens de l'épaisseur, à une seconde portion de la portion d'enroulement. Une bande de tôle permettant de fabriquer un tel élément de liaison est illustrée sur la figure 8. Dans le mode de réalisation illustré sur cette figure, une première portion 51 de la portion d'enroulage est dédoublée en deux premières sous-bandes 41 et 42, séparées par un intervalle 39 de largeur axiale a, et une seconde portion 52 de la portion d'enroulement est de largeur axiale b, la largeur axiale b étant légèrement inférieure à la largeur a de l'intervalle 39. Ainsi, une fois qu'une portion 53 centrale joignant la première portion 51 et la seconde portion 52, a été enroulée sur elle-même de manière à faire se rejoindre ses extrémités 53a et 53b, une portion des bandes 41 et 42 peut être bobinée sur le noyau ainsi formé, en laissant entre elles l'intervalle axial a dans lequel on vient bobiner une portion de la second portion 52 de bande d'enroulement. L'épaisseur totale de l'enroulement peut ainsi être réduite tout en augmentant sa largeur totale.

La forme (contour, épaisseur, forme d'embouti, perçages) des extrémités d'assemblage peut être adaptée à l'encombrement du véhicule et/ou à la géométrie des moyens d'assemblage.

Les éléments de liaison selon l'invention permettent de réduire considérablement les risques de projection des équipements des véhicules utilitaires vers l'habitacle du conducteur. Ces éléments de liaison peuvent être utilisés comme éléments d'absorption d'énergie cinétique pour arrimer divers éléments à la structure d'un véhicule. Ils peuvent par exemple être insérés dans des systèmes d'ancrage de ceintures de sécurité.

Ces éléments de liaison sont robustes et simples à fabriquer. Ils ne requièrent que peu ou pas d'adaptation des équipements que l'on souhaite maintenir avec ces éléments de liaison.

**Revendications**

1. Elément de liaison (1) permettant d'assembler deux éléments par une liaison de type encastrement, l'élément de liaison comprenant une bande de tôle (2) comportant une première (3) et une seconde extrémité (4) aptes à être assemblées respectivement sur le premier et sur le second élément, **caractérisé en ce que** la bande (2) comprend une portion d'enroulement (16) reliant les deux extrémités (3, 4), qui est roulée sur elle-même de manière à former un rouleau (30) hors duquel les deux extrémités (3,4) émergent suivant le même sens de rotation, et qui est dimensionnée pour assurer la résistance en traction, torsion, et flexion entre les deux extrémités (3, 4) d'assemblage.

2. Elément de liaison selon la revendication 1, dans lequel la portion d'enroulement (16) de la bande comprend une portion centrale (6) de bande pliée en forme de "S", la portion centrale formant un noyau autour duquel s'enroulent, respectivement dans le prolongement d'une première et d'une seconde extrémités du "S", un premier (5a) et un second tronçon (5b) de la portion d'enroulement (16).

**3.** Elément de liaison selon la revendication 2, dans lequel les extrémités du "S" sont sensiblement tangentes à une première spire (7) du rouleau (30), formée par deux demi cylindres dessinés respectivement par le premier (5a) et le second (5b) tronçon, la première spire (7) entourant le "S".

**4.** Elément de liaison selon la revendication 3, dans lequel la portion d'enroulement (16) est roulée sur elle-même autour du noyau (6), de manière à former une succession de couches superposées et concentriques de la bande (2).

**5.** Elément de liaison selon l'une des revendications 2 à 4, dans lequel la largeur axiale de chaque tronçon (5a, 5b) est croissante entre la portion (6) en "S", et les extrémités d'assemblage (3, 4).

**6.** Elément de liaison selon l'une des revendications précédentes, dans lequel chacun des deux tronçons (5a, 5b) de la portion d'enroulement (16) est de largeur axiale constante.

**7.** Elément de liaison selon la revendication 6, dans lequel la largeur axiale de la portion d'enroulement (16) est sensiblement constante couche par couche.

**8.** Elément de liaison selon l'une des revendications précédentes, dans lequel la longueur de la partie enroulée de la portion d'enroulement (16) est inférieure à 300mm, et de préférence est inférieure à 250mm.

**9.** Elément de liaison selon l'une des revendications précédentes, dans lequel le diamètre des spires d'enroulement successives, l'épaisseur (e) de la tôle et l'allongement à rupture du matériau qui la constitue sont choisis de manière à pouvoir dérouler à plat les deux tronçons (5a, 5b) de la portion d'enroulement (16) sans dépasser l'allongement à rupture de la tôle sur l'intérieur des spires déroulées.

**10.** Elément de liaison selon l'une des revendications précédentes, dans lequel l'épaisseur de la bande est supérieure ou égale à 1,5mm, et de préférence supérieure ou égale à 2,5mm.

**11.** Elément de liaison selon l'une des revendications précédentes, dans lequel la largeur axiale minimale de la portion d'enroulement (16) est supérieure ou égale à 5 fois son épaisseur, et de préférence est supérieure ou égale à 10 fois son épaisseur.

**12.** Elément de liaison selon l'une des revendications précédentes, dans lequel la tôle est en acier.

**13.** Elément de liaison selon l'une des revendications précédentes, dans lequel la tôle est en alliage d'aluminium.

**14.** Elément de liaison selon l'une des revendications précédentes, dans lequel les deux extrémités d'assemblage (3, 4) sont disposées sensiblement à angle droit l'une par rapport à l'autre, ou de manière à pouvoir être solidarisées avec deux plans (28, 29) sensiblement perpendiculaires l'un par rapport à l'autre.

**15.** Elément de liaison selon l'une des revendications précédentes, dans lequel le "S" dessiné par la portion centrale de la bande est formé de deux demi cercles tangents l'un à l'autre.

# FIG.1

# FIG.2

## FIG.3

## FIG.4

## FIG.5

## FIG.6

# FIG.7

# FIG.8

Europäisches
Patentamt

European
Patent Office

Office européen
des brevets

# RAPPORT DE RECHERCHE EUROPEENNE

Numéro de la demande

EP 12 30 5143

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 95/29738 A1 (SMALL GREGORY ERIC [CA]) 9 novembre 1995 (1995-11-09) | 1-13,15 | INV.<br>B60R7/04 |
| Y | * page 12, alinéa 3 - page 13, alinéa 1; figures 4-8 *<br>* page 14, alinéa 1 *<br>* page 15, alinéa 3 - page 16, alinéa 1 * | 14 | B60R11/06<br>B60R21/055<br>F16F7/12 |
| X | FR 2 857 601 A1 (ARGOUD RODOLPHE [FR]) 21 janvier 2005 (2005-01-21)<br>* page 2, ligne 17-34; figure 9 *<br>* page 5, ligne 17-21 * | 1,6-8, 10-13,15 | |
| X | DE 20 2009 017362 U1 (LOH KG HAILO WERK [DE]) 5 mai 2011 (2011-05-05)<br>* abrégé; figure 4 *<br>* alinéa [0042] * | 1-4, 6-13,15 | |
| Y | WO 96/06756 A1 (REES OPERATIONS PTY LTD [AU]; COOGAN JAMES DEANE [AU]) 7 mars 1996 (1996-03-07)<br>* abrégé; figures 1a,8,9 *<br>* page 14, alinéa 4 - page 15, alinéa 1 * | 14 | |
| A | WO 2011/008154 A1 (MODUL SYSTEM HH AB [SE]; CARLSSON ANDERS [SE]; IRAEUS JOHAN [SE]) 20 janvier 2011 (2011-01-20)<br>* abrégé; figures 1,2 * | 1 | DOMAINES TECHNIQUES RECHERCHES (IPC)<br>B60R<br>F16F |
| A | FR 2 771 464 A1 (INST NAT RECH SECURITE [FR]) 28 mai 1999 (1999-05-28)<br>* abrégé; figure 2 * | 1 | |
| A | EP 0 404 075 A2 (MAZDA MOTOR [JP]) 27 décembre 1990 (1990-12-27)<br>* abrégé; figures 13,14 * | 1 | |

Le présent rapport a été établi pour toutes les revendications

| Lieu de la recherche | Date d'achèvement de la recherche | Examinateur |
|---|---|---|
| Berlin | 5 juillet 2012 | Sleightholme-Albanis |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**     EP 12 30 5143

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-07-2012

| Document brevet cité au rapport de recherche | | Date de publication | Membre(s) de la famille de brevet(s) | | Date de publication |
|---|---|---|---|---|---|
| WO 9529738 | A1 | 09-11-1995 | AU | 2301395 A | 29-11-1995 |
| | | | CA | 2122437 A1 | 29-10-1995 |
| | | | EP | 0749337 A1 | 27-12-1996 |
| | | | US | 5799760 A | 01-09-1998 |
| | | | WO | 9529738 A1 | 09-11-1995 |
| FR 2857601 | A1 | 21-01-2005 | AUCUN | | |
| DE 202009017362 | U1 | 05-05-2011 | AUCUN | | |
| WO 9606756 | A1 | 07-03-1996 | AT | 210570 T | 15-12-2001 |
| | | | CA | 2182691 A1 | 07-03-1996 |
| | | | CN | 1147228 A | 09-04-1997 |
| | | | DE | 69524607 D1 | 24-01-2002 |
| | | | DE | 69524607 T2 | 08-08-2002 |
| | | | EP | 0777590 A1 | 11-06-1997 |
| | | | JP | H10504506 A | 06-05-1998 |
| | | | NZ | 292066 A | 22-08-1997 |
| | | | US | 5735564 A | 07-04-1998 |
| | | | WO | 9606756 A1 | 07-03-1996 |
| | | | ZA | 9507246 A | 25-03-1996 |
| WO 2011008154 | A1 | 20-01-2011 | EP | 2454127 A1 | 23-05-2012 |
| | | | SE | 0900992 A1 | 17-01-2011 |
| | | | WO | 2011008154 A1 | 20-01-2011 |
| FR 2771464 | A1 | 28-05-1999 | AUCUN | | |
| EP 0404075 | A2 | 27-12-1990 | EP | 0404075 A2 | 27-12-1990 |
| | | | JP | 3021548 A | 30-01-1991 |

EPO FORM P0460

Pour tout renseignement concernant cette annexe : voir Journal Officiel de l'Office européen des brevets, No.12/82